# EUROPEAN PATENT APPLICATION

(11) **EP 3 056 793 A1**
(43) Date of publication of application: **17.08.2016**
(21) Application number: 16000712.6
(22) Date of filing: 19.06.2008
(51) Int. Cl.: F17C 9/00, F17C 5/06, F17C 9/02

(54) **FUEL GAS SUPPLY SYSTEM AND METHOD OF A SHIP**

(30) Priority: 19.07.2007 KR 20070072242; 27.11.2007 KR 20070121558; 30.11.2007 KR 20070123679; 05.03.2008 KR 20080020356
(62) Divisional of application: 11009863.9
(71) Applicant: Daewoo Shipbuilding & Marine Engineering Co., Ltd., Seoul 100-180 (KR)
(72) Inventor: Lee, Jung Han, 656-753 Gyeongsangnam-do (KR); Kwon, Soon Been, 137-907 Seoul (KR); Kim, Nam Soo, 440-710 Suwon-si (KR); Cho, Ik Kyu, 412-717 Gyeonggi-do (KR); Choi, Dong Kyu, 656-757 Gyeongsangnam-do (KR); Park, Hyun Ki, 656-752 Gyeongsangnam-do (KR)
(74) Representative: Bosch Jehle Patentanwaltsgesellschaft mbH

(57) **Abstract**

A fuel gas supply system of a ship is provided for supplying fuel gas to a high-pressure gas injection engine of a ship, wherein LNG is extracted from an LNG tank of the ship, compressed at a high pressure, gasified, and then supplied to the high-pressure gas injection engine.

## Description

### Technical Field

The present invention relates to a fuel gas supply system and method of a ship, and more particularly, to a fuel gas supply system and method of a ship for efficiently supplying fuel gas from an LNG tank to a high-pressure gas injection engine in the ship.

### Background Art

Generally, natural gas is turned into a liquefied natural gas (hereinafter called "LNG") at a cryogenic temperature in a liquefaction plant, and then transported over long distances to a destination by an LNG carrier.

As liquefaction of natural gas occurs at a cryogenic temperature of -163 degrees Celsius at ambient pressure, LNG is likely to be vaporized even when the temperature of the LNG is slightly higher than -163 degrees Celsius at ambient pressure. In an LNG carrier having an LNG storage tank which is thermally-insulated, as heat is continually transmitted from the outside to the LNG in the LNG storage tank, the LNG is continually vaporized and boil-off gas is generated in the LNG storage tank during the transportation of LNG by the LNG carrier.

In the LNG carrier, if boil-off gas is accumulated in an LNG storage tank, the pressure in the LNG storage tank excessively increases. Consequently, to treat the boil-off gas generated in the LNG storage tank, the boil-off gas is used as a fuel for a ship propulsion engine or burned in a gas combustor.

In case where a high-pressure gas injection engine, for example, MEGI engine manufactured by MAN B&W Diesel Inc., is used as a ship propulsion engine of an LNG carrier, a multi-stage compressor is used in a conventional fuel gas supply system to compress boil-off gas at a high pressure. This multi-stage compression has problems that the fuel gas supply system becomes very complex, and that an excessive amount of power is required to compress the boil-off gas in a gaseous state at a high pressure.

A ship such as a bulk carrier, a container ship, a crude oil tanker and chemical tanker could be propelled using LNG as fuel. Such a ship has an LNG fuel tank for storing LNG as fuel and uses the same engine as the LNG carrier. The fuel gas supply system of such a ship has same problems as that of the LNG carrier.

### DISCLOSURE OF INVENTION

According to an aspect of the invention, a fuel gas supply system is provided of a vessel for supplying fuel gas from an LNG tank, which stores LNG as fuel gas, to a high-pressure gas injection engine, comprising:
a boil-off gas liquefaction line configured to extract boil-off gas generated in the LNG tank;
a compressor installed in the boil-off gas liquefaction line to compress the boil-off gas;
a recondenser configured to condense the compressed boil-off gas;
a fuel gas supply line configured to extract LNG from the LNG tank and supply the extracted LNG as fuel gas to the high-pressure gas injection engine;
a high-pressure pump installed in the fuel gas supply line to compress LNG from the LNG tank at a high pressure and supply the compressed LNG to the high-pressure gas injection engine; and
a vaporizer configured to vaporize reliquefied boil-off gas compressed by the high-pressure pump,
wherein the recondenser condenses the boil-off gas by using LNG extracted from the LNG tank.

Advantageously, the high-pressure pump compresses the reliquefied boil-off gas to 200 to 300 bar (gauge pressure) and supplies the compressed liquefied boil-off gas as fuel gas to the high-pressure gas injection engine.

According to a further aspect, a fuel gas supply system of a ship is provided for supplying fuel gas to a high-pressure gas injection engine of the ship, the fuel gas supply system comprising:
an LNG tank;
a fuel gas supply line connected from the LNG tank to the high-pressure gas injection engine of the ship;
means for compressing the LNG installed in the fuel gas supply line between the LNG tank and the high-pressure gas injection engine; and
means for gasifying the LNG installed downstream of the compressing means in the fuel gas supply line, to gasify the compressed LNG.

Advantageously, the compressing means is configured to extract LNG from the LNG tank, compress the extracted LNG at a high pressure, and supply the compressed LNG toward the high-pressure gas injection engine.

Advantageously, the compressing means comprises one pump.

Advantageously, the compressing means further comprises another pump.

Advantageously, the fuel gas supply system further comprises:
a heat exchanger installed downstream of the one pump in the fuel gas supply line; and
a boil-off gas liquefaction line connected from an upper portion of the LNG tank, passing through the heat exchanger, to one side of the LNG tank, the boil-off gas liquefaction line configured to liquefy boil-off gas generated in the LNG tank.

Advantageously, the fuel gas supply system further comprises:
a heat exchanger installed between the one pump and the other pump in the fuel gas supply line; and
a boil-off gas liquefaction line passing through the heat exchanger from an upper portion of the LNG tank and connected between the heat exchanger and the gasifying means.

Advantageously, the fuel gas supply system further comprises:
a recondenser installed downstream of the one pump in the fuel gas supply line; and
a boil-off gas liquefaction line connected from an upper portion of the LNG tank, passing through the recondenser, and to the LNG tank.

Advantageously, the gasifying means is a heater.

Advantageously, LNG is extracted from the LNG tank and then compressed to approximately 20 to 300 bar gauge pressure.

Advantageously, the LNG tank is designed to withstand a pressure increase due to the boil-off gas so as to allow a pressure increase due to the boil-off gas generated in the LNG tank during the voyage of the ship.

Advantageously, the ship is an LNG carrier and the LNG tank is an LNG storage tank.

Advantageously, the ship is a ship such as a bulk carrier, a container ship, a crude oil tanker and chemical tanker and the LNG tank is an LNG fuel tank for storing LNG as fuel.

According to a further aspect, a fuel gas supply method is provided of a liquefied natural gas (LNG) carrier for supplying fuel gas to a high-pressure gas injection engine of the ship, comprising:
extracting LNG from an LNG tank of the ship;
compressing the extracted LNG to meet the pressure requirements for the high-pressure gas injection engine;
gasifying the compressed LNG; and
supplying the gasified LNG to the high-pressure gas injection engine.

Advantageously, the method further comprises:
extracting a boil-off gas from the LNG tank; and
exchanging heat between the LNG and the boil-off gas before supplying the LNG to the high-pressure gas injection engine.

Advantageously, the method further comprises:
liquefying the boil-off gas; and
returning the liquefied boil-off gas to the LNG tank.

Advantageously, the method further comprises:
increasing a temperature of the LNG via the exchanging of heat between the LNG and the boil-off gas before supplying the LNG to the high-pressure gas injection engine;
liquefying the boil-off gas; and
supplying the liquefied boil-off gas to the high-pressure gas injection engine.

Advantageously, the method further comprises:
mixing the LNG with the boil-off gas extracted from the LNG tank; and
supplying the mixture of the LNG and the boil-off gas to the high-pressure gas injection engine.

Advantageously, the LNG is gasified by being heated.

Advantageously, the method further comprises:
allowing a pressure increase due to the boil-off gas generated in the LNG tank during the voyage of the ship.

Advantageously, the LNG pressure for the high-pressure gas injection engine ranges from about 20 bar to about 300 bar gauge pressure.

To solve some of the above-mentioned or other problems posed by the prior art, the present invention inter alia is to provide a fuel gas supply system and method of a ship which can simplify the configuration, reduce power requirements, and prevent an excessive pressure increase due to accumulation of boil-off gas in an LNG tank, in supplying fuel gas to a high-pressure gas injection engine of the ship.

To achieve the above-mentioned purposes, the fuel gas supply system of a ship according to one embodiment of the present invention, as a system for supplying fuel gas to a high-pressure gas injection engine of a ship, is characterized in that LNG is extracted from an LNG tank of the ship, compressed at a high pressure, gasified, and then supplied to the high-pressure gas injection engine.

Also, the fuel gas supply method of a ship according to one embodiment of the present invention, as a method for supplying fuel gas to a high-pressure gas injection engine of the ship, is characterized in that LNG is extracted from an LNG tank of the ship, compressed to meet the pressure requirements for the high-pressure gas injection engine, gasified, and then supplied to the high-pressure gas injection engine.

### BRIEF DESCRIPTION OF THE SEVERAL VIEWS OF THE DRAWINGS

Figure 1 is a schematic view of a fuel gas supply system of a ship according to an embodiment of the present invention;
Figure 2 is a schematic view of a fuel gas supply system of a ship according to another embodiment of the present invention; and
Figure 3 is a schematic view of a fuel gas supply system of a ship according to yet another embodiment of the present invention.

### DETAILED DESCRIPTION

Preferred embodiments of the present invention will be described in detail below with references to the accompanying drawings.

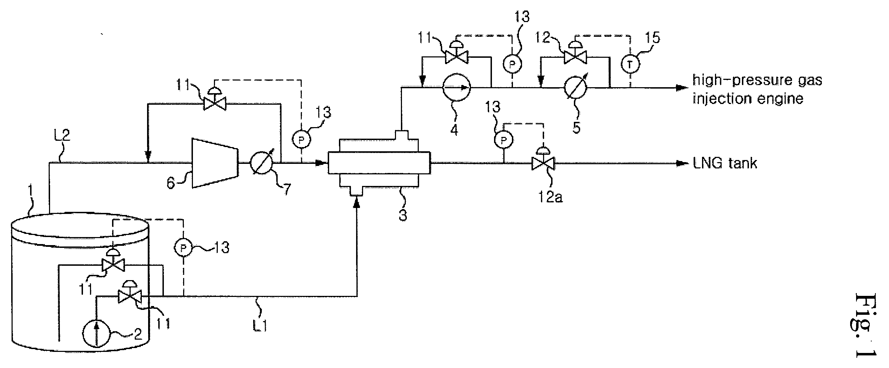

Figure 1 is a schematic view of a fuel gas supply system of a ship according to an embodiment of the present invention. As illustrated in Figure 1, the fuel gas supply system of a ship is to supply fuel gas to a high-pressure gas injection engine of a ship.

The fuel gas supply system of Figure 1 includes a fuel gas supply line L1 for supplying LNG extracted from an LNG tank 1 of a ship to a high-pressure gas injection engine of the ship, and a heat exchanger 3 installed in the middle of the fuel gas supply line L1 so as to exchange heat between LNG and boil-off gas extracted from the LNG tank 1.

The ship may be an LNG carrier. The LNG carrier has an LNG storage tank for storing LNG. In this case, the LNG tank 1 is an LNG storage tank.

Further, the ship may be a ship such as a bulk carrier, a container ship, a crude oil tanker and chemical tanker that could be propelled using LNG as fuel. Such a ship has an LNG fuel tank for storing LNG as fuel. In this case, the LNG tank 1 is an LNG fuel tank for storing LNG as fuel.

The fuel gas supply line L1 upstream of the heat exchanger 3 has a first pump 2 for compressing the LNG to meet the pressure requirements for the high-pressure gas injection engine and supplying the LNG toward the high-pressure gas injection engine. According to this embodiment, the first pump 2 is illustrated as installed in the LNG tank 1, but may be installed in the fuel gas supply line L1 upstream of the heat exchanger 3 outside the LNG tank 1. Also, the first pump 2 may comprise one pump or two pumps.

A boil-off gas liquefaction line L2 is connected from an upper portion of the LNG tank 1, passing through the heat exchanger 3, to one side of the LNG tank 1. The boil-off gas is extracted from an upper portion of the LNG tank 1, passes through the heat exchanger 3, and is returned to one side of the LNG tank 1.

In the heat exchanger 3, the LNG exchanges heat with the boil-off gas to increase the temperature of the LNG and then the LNG is supplied toward the high-pressure gas injection engine, and the boil-off gas is liquefied by heat exchange with the LNG and then returned to the LNG tank 1. If the boil-off gas in an upper portion of the LNG tank 1 is liquefied and returned to a lower portion of the LNG tank 1, it can prevent the pressure in the LNG tank 1 from excessively increasing due to accumulation of the boil-off gas in the LNG tank 1.

In one embodiment, a second pump 4 is installed in the fuel gas supply line L1 downstream of the heat exchanger 3 so as to compress the LNG which has exchanged heat with the boil-off gas to meet the pressure requirements for the high-pressure gas injection engine, and then to supply the compressed LNG to the high-pressure gas injection engine.

A heater 5 is installed in the fuel gas supply line L1 downstream of the second pump 4 so as to heat the LNG which has exchanged heat in the heat exchanger 3, and then to supply the heat exchanged LNG to the high-pressure gas injection engine.

In one embodiment, boil-off gas compressor 6 and a cooler 7 are installed in the boil-off gas liquefaction line L2 upstream of the heat exchanger 3 so as to compress and cool the boil-off gas extracted from the LNG tank 1 before the exchange of heat between the boil-off gas and the LNG.

In a case where the high-pressure gas injection engine is, for example, an MEGI engine manufactured and sold by MAN B&W Diesel Inc., the pressure of the fuel gas required for the MEGI engine can range from 200 to 300 bar (gauge pressure), preferably 250 bar (gauge pressure). The LNG is compressed to 27 bar (gauge pressure) in the first pump 2, and the temperature of the LNG increases from approximately -163 degrees Celsius to approximately -100 degrees Celsius while passing through the heat exchanger 3, and the LNG in a liquid state is supplied to the second pump 4 and compressed to approximately 250 bar (gauge pressure) in the second pump 4 (as it is in a supercritical state, there is no division between liquid and gas states), then heated in the heater 5, and then supplied to the high-pressure gas injection engine. In this case, as the pressure of the LNG supplied to the heat exchanger 3 is high, the LNG, though its temperature increases by passing through the heat exchanger, is not gasified.

On the other hand, in case where the high-pressure gas injection engine is, for example, a gas turbine engine, the pressure of fuel gas required for the gas turbine engine can range from 20 to 40 bar (gauge pressure), preferably 30 bar (gauge pressure). The LNG is compressed to 30 bar (gauge pressure) in the first pump 2, and part of the LNG is gasified while passing through the heat exchanger 3, supplied to the heater 5 and heated in the heater 5, and then supplied to the high-pressure gas injection engine. In this case, the second pump 4 is not necessary.

Flow rate control-type pressure control valves 11 are installed in the fuel gas supply line L1 at the front and rear of the first pump 2, in the fuel gas supply line L1 at the front and rear of the second pump 4, and in the boil-off gas liquefaction line L2 at the front and rear of the boil-off gas compressor 6 and the cooler 7, so as to control the pressure of the fluid passing through the lines.

Also, flow rate control-type temperature control valves 12 are installed in the fuel gas supply line 11 at the front and rear of the heater 5 so as to control the temperature of the fluid passing though the line.

Pressure sensors 13 are connected between the fuel gas supply line L1 at a rear end of the first pump 2, the fuel gas supply line L1 at a rear end of the second pump 4, the boil-off gas liquefaction line L2 at a rear end of the boil-off gas compressor 6 and the cooler 7, and the pressure control valves 11. Also, temperature sensors 15 are connected between the fuel gas supply line L1 at a rear end of the heater 5 and the temperature control valves 12.

The flow rate control-type pressure control valves 11 and temperature control valve 12 control the flow rate, thereby controlling the pressure or temperature of the fluid passing through themselves.

Also, an expandable pressure control valve 12a is installed in the middle of the boil-off gas liquefaction line L2 downstream of the heat exchanger 3 so as to control the pressure of the fluid passing through the line L2.

The pressure sensor 13 is connected between the pressure control valve 12a and the boil-off gas liquefaction line L2 at a front end of the pressure control valve 12a installed in the boil-off gas liquefaction line L2 downstream of the heat exchanger 3.

The pressure control valve 12a installed in the boil-off gas liquefaction line L2 downstream of the heat exchanger 3 expands the passing fluid so as to correspond to the pressure which is obtained by adding the pressure of the LNG tank 1 to the pressure due to water head of the LNG in the LNG tank 1, thereby controlling the pressure, and the temperature of the LNG decreases by the expansion.

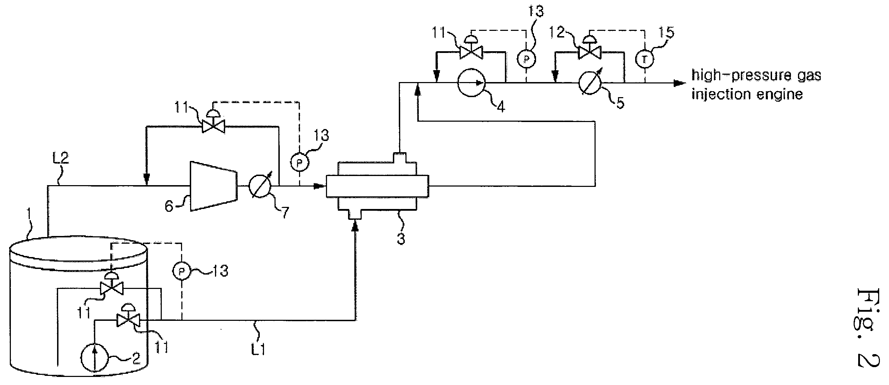

In one embodiment, as illustrated in Figure 2, the boil-off liquefaction line L2 may be configured such that it passes through the heat exchanger 3 from an upper portion of the LNG tank 1 and is connected between the heat exchanger 3 and the heater 5 in the middle of the fuel gas supply line L1. According to this configuration, boil-off gas is liquefied by heat exchange with the LNG in the heat exchanger 3, compressed in a liquid state, gasified, and then used as fuel gas of the high-pressure gas injection engine. In this case, the pressure control valve 12a installed in the boil-off gas liquefaction line L2 downstream of the heat exchanger 3 controls the pressure of the passing fluid to correspond to the pressure of the LNG in the fuel gas supply line L1.

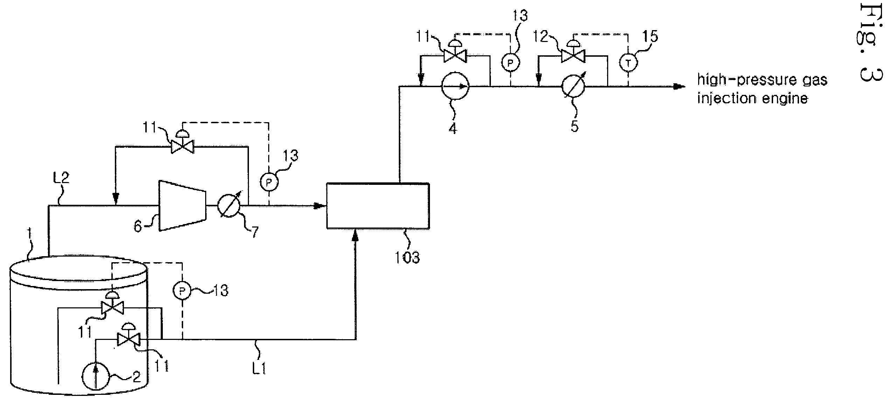

According to the above-mentioned embodiment, the heat exchanger 3 for exchanging heat between the LNG and the boil-off gas extracted from the LNG tank 1 is installed in the middle of the fuel gas supply line L1. However, instead of the heat exchanger 3, a recondenser for directly mixing the LNG and the boil-off gas may be installed. According to the embodiment illustrated in Figure 3, a recondenser 103 instead of a heat exchanger is installed in the fuel gas supply line L1. The boil-off gas liquefaction line L2 for extracting boil-off gas from an upper portion of the LNG tank 1 and returning the extracted boil-off gas to one side of the LNG tank 1 passes through the recondenser 103 installed in the middle of the fuel gas supply line L1. The recondenser 103 generates condensed LNG by mixing/liquefying the LNG extracted from a lower portion of the LNG tank 1 and the boil-off gas extracted from the upper portion of the LNG tank 1. The LNG condensed in the recondenser 103 is supplied to the high-pressure gas injection engine through the fuel gas supply line L1, or returned to the LNG tank 1 through the boil-off gas liquefaction line L2.

Also, according to the fuel gas supply system of a ship of the present invention, the boil-off gas generated in the LNG tank is not compressed in a gas state at a high pressure, and thus is not used as fuel gas of the high-pressure gas injection engine.

Additionally, the LNG tank used in the fuel gas supply system of a ship according to embodiments of the present invention may be designed such that it has strength enough to withstand a pressure increase due to the boil-off gas so as to allow the pressure increase due to the boil-off gas generated in the LNG tank during the voyage of the ship.

Further, the fuel gas supply system of a ship according to embodiments of the present invention may include a boil-off gas reliquefaction apparatus comprising a cold box and a refrigeration system. A heat exchanger is installed in the middle of the fuel gas supply line for compressing the LNG in the LNG tank and supplying the compressed LNG as fuel gas to the high-pressure gas injection engine, and the fuel gas generated in the LNG tank exchanges heat with the LNG in the middle of the boil-off gas supply line, and thereby is liquefied. Consequently, the boil-off gas reliquefaction apparatus which is additionally installed may be configured to have a small capacity.

As apparent from the above, according to the fuel gas supply system and method of a ship of the present invention, LNG is extracted from an LNG tank, compressed at a high pressure, gasified, and supplied to a high-pressure gas injection engine. Consequently, the fuel gas supply system and method have advantages of simplifying the configuration, reducing power requirements, and preventing an excessive pressure increase due to accumulation of boil-off gas in the LNG tank, in supplying fuel gas to the high-pressure gas injection engine in a ship.

Though the present invention has been shown and described herein with references to the specified embodiments, it would be understood that various modifications, variations, and corrections may occur to those skilled in the art, and thus the description and drawings herein should be interpreted by way of illustrative purpose without limiting the scope and spirit of the present invention.

## Claims

1. A fuel gas supply system of a vessel for supplying fuel gas from an LNG tank (1), which stores LNG as fuel gas, to a high-pressure gas injection engine, comprising:
a boil-off gas liquefaction line (L2) configured to extract boil-off gas generated in the LNG tank (1);
a compressor (6) installed in the boil-off gas liquefaction line to compress the boil-off gas;
a recondenser (103) configured to condense the compressed boil-off gas;
a fuel gas supply line (L1) configured to extract LNG from the LNG tank and supply the extracted LNG as fuel gas to the high-pressure gas injection engine;
a first pump (2) to compress the LNG and to communicate the compressed LNG downstream along the fuel gas supply line,
a second pump (4) installed in the fuel gas supply line to compress LNG from the LNG tank at a high pressure and supply the compressed LNG to the high-pressure gas injection engine;
wherein the recondenser (103) condenses the boil-off gas by using LNG extracted from the LNG tank, directly mixing the LNG and the boil-off gas,
wherein the second pump is configured to receive the compressed LNG and
further compress the LNG to meet the pressure requirements for the high-pressure gas injection engine.

2. The fuel gas supply system of a vessel according to claim 1, wherein the second pump (4) compresses the LNG to a pressure of 200 to 300 bar.

3. The fuel gas supply system of a vessel according to claim 1, comprising a vaporizer configured to vaporize reliquefied boil-off gas.
